# FASCICULE DE BREVET EUROPEEN

(11) **EP 2 443 588 B1**
(45) Date de publication et mention de la délivrance du brevet: **12.09.2018**
(21) Numéro de dépôt: 10737998.4
(22) Date de dépôt: 11.06.2010
(51) Int. Cl.: G06K 9/20

(54) **DISPOSITIF D'IMAGERIE A ELEMENT PRISMATIQUE**
BILDGEBUNGSVORRICHTUNG MIT PRISMENELEMENT
IMAGING DEVICE HAVING A PRISMATIC ELEMENT

(30) Priorité: 16.06.2009 FR 0954027
(43) Date de publication de la demande: 25.04.2012
(73) Titulaire: MORPHO, 92130 Issy-Les-Moulineaux (FR)
(72) Inventeur: DUMONT, Denis, F-75015 Paris (FR); MONNE, Johnatan, F-75015 Paris (FR)
(74) Mandataire: Cabinet Plasseraud
(86) Numéro de dépôt international: PCT/FR2010/051174
(87) Numéro de publication internationale: WO 2010/146290

(56) Documents cités:
- WO-A1-95/24692
- WO-A1-96/13742
- WO-A1-2004/021278
- US-B1- 6 292 576

## Description

La présente invention concerne un dispositif d'imagerie à élément prismatique, ainsi qu'un appareil de détection d'empreinte cutanée et un terminal de lecture qui incorporent chacun un tel dispositif d'imagerie.

De nombreux dispositifs d'imagerie incorporent chacun un élément prismatique qui est traversé par de la lumière utilisée pour former l'image produite par le dispositif. Des jumelles grossissantes et des appareils de détection d'empreinte cutanée figurent parmi ces dispositifs.

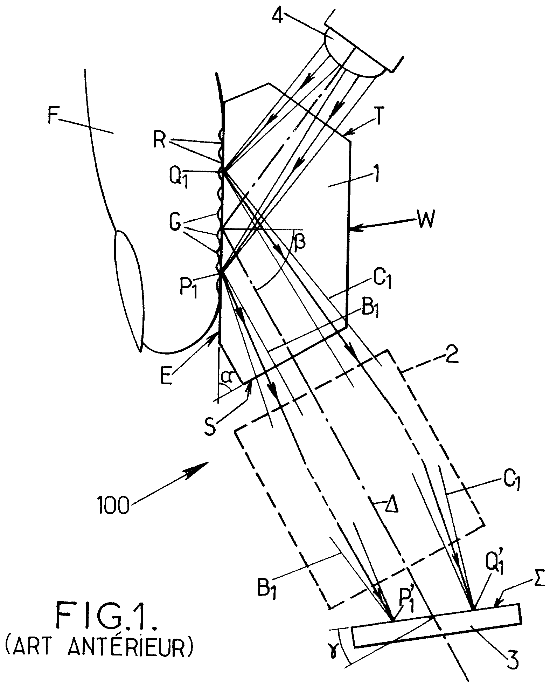

En particulier, un dispositif de détection d'empreinte cutanée tel qu'existant avant la présente invention est représenté sur la figure 1. Le dispositif, qui est globalement référencé 100, comprend un prisme de matériau transparent 1, un objectif 2 et un capteur d'image 3. Ces éléments sont disposés de sorte que, lors d'une utilisation du dispositif, le capteur 3 saisisse une image qui est formée par l'objectif 2 à partir de rayons qui ont traversé le prisme 1. Le prisme 1 est constitué en général d'un matériau homogène, tel que du polyméthylméthacrylate (PMMA) ou du verre, par exemple. Il possède une face d'entrée E qui est plane, et une face de sortie S qui est aussi plane ou qui peut être considérée comme étant plane dans une première explication du fonctionnement du dispositif. Les faces d'entrée E et de sortie S forment entre elles un angle α, étant entendu que les faces E et S ne sont pas nécessairement adjacentes dans le prisme 1. Autrement dit, le prisme 1 ne possède pas nécessairement une arrête unique entre les faces E et S, mais une face intermédiaire peut être située entre les faces E et S. Dans ce cas, l'angle α du prisme 1 apparaît entre des plans qui prolongent respectivement les faces E et S. L'objectif 2 peut être d'un type quelconque, à trois ou quatre lentilles par exemple, et le capteur 3 comprend une surface photosensible ∑ qui est formée par une matrice de photodétecteurs.

Le capteur d'image 3 est disposé de sorte que l'objectif 2 conjugue optiquement la face d'entrée E du prisme 1 avec la surface photosensible ∑ du capteur. Pour cela, la surface ∑ est en général inclinée d'un angle γ par rapport à un plan qui est perpendiculaire à un axe optique Δ de l'objectif 2. De cette façon, chaque point de la surface ∑ est l'image d'un point de la face d'entrée E. La figure 1 montre des faisceaux de rayons B₁ et C₁ qui forment sur la surface ∑ des points d'image différents P₁' et Q₁', respectivement conjugués avec deux points distincts P₁ et Q₁ de la face d'entrée E. Autrement dit, l'objectif 2 produit sur la surface ∑ une image nette d'un motif qui est situé sur la face d'entrée E.

Lorsqu'un utilisateur du dispositif de détection d'empreinte cutanée de la figure 1 place l'extrémité d'un de ses doigts F sur la face d'entrée E, une image de son empreinte digitale est produite sur la surface ∑ du capteur 3, et est saisie. En effet, la surface cutanée du doigt F comporte un motif de reliefs R qui sont alternés avec des sillons G («grooves» en anglais). Ainsi, lorsque l'utilisateur applique son doigt F sur la face E, les sommets des reliefs R sont en contact avec la face d'entrée E et les sillons G sont en retrait par rapport à cette face en étant séparés de celle-ci par un interstice d'air.

La lumière qui est utilisée pour former l'image de l'empreinte digitale saisie par le capteur 3, le plus souvent de la lumière visible ou infrarouge, peut être introduite de plusieurs façons, également connues.

Selon une première de ces façons, elle peut être introduite dans le doigt F à travers la peau à proximité de l'extrémité qui est appliquée sur la face E. La lumière se propage alors à l'intérieur du doigt F et sort au niveau des reliefs R qui sont en contact avec le matériau du prisme 1 sur la face d'entrée E de celui-ci.

Selon une deuxième façon d'introduire la lumière, qui est représentée sur la figure 1, une source lumineuse 4 est disposée de façon à éclairer la face E du prisme 1, à travers une face supplémentaire T du prisme 1. La face supplémentaire T est située de sorte qu'un rayon qui est produit par la source 4 et qui entre dans le prisme 1 par cette face T, en direction de la face E, subisse une réflexion à l'intérieur du prisme 1 et ressorte par la face S en direction de l'objectif 2. En outre, les faces E et S du prisme 1 et l'axe optique Δ de l'objectif 2 sont orientés pour que la réflexion interne du rayon sur la face E soit totale lorsqu'un sillon cutané G est présent au point de cette réflexion, et soit partielle lorsqu'un relief cutané R est en contact avec la face E au point de la réflexion. Pour cela, et lorsque le prisme 1 est en PMMA, l'axe optique Δ de l'objectif 2 forme un angle β qui peut être d'environ 48° avec une direction perpendiculaire à la face E. En effet, pour une interface PMMA/air, l'angle limite de réflexion totale est d'environ 42°. Pour un tel deuxième mode d'éclairage, les sillons G apparaissent brillants dans l'image qui est saisie par le capteur 3, alors que les reliefs R apparaissent sombres. Un tel deuxième mode d'éclairage correspond à des conditions d'imagerie dites par ombroscopie.

Selon une troisième façon, la lumière d'éclairement peut être introduite dans le prisme 1 à travers encore une autre face du prisme 1 qui est opposée à la face E, et qui est notée W. De préférence, cette lumière peut alors être diffuse. Dans ces conditions, les sillons G de l'empreinte digitale apparaissent sombres dans l'image qui est saisie par le capteur 3, alors que les reliefs R apparaissent clairs. Ce troisième mode d'éclairage est du type éclairage direct. Lorsque la face supplémentaire T de l'élément prismatique 1 est présente, à partir de laquelle une réflexion interne totale peut se produire sur la face E, un écran absorbant peut être disposé en vis-à-vis de la face supplémentaire T, ou bien cette face supplémentaire T peut être elle-même rendue absorbante.

Enfin, il est aussi connu de conférer une forme courbe, par exemple sphérique, à la face de sortie S du prisme 1, de façon que cette face possède une puissance optique additionnelle qui se combine avec celle de l'objectif 2.

Mais un dispositif d'imagerie tel qu'illustré par la figure 1 est limité à la détection d'une empreinte cutanée, et n'est pas prévu pour fournir une information supplémentaire. Lorsqu'une telle information supplémentaire est voulue, un dispositif additionnel d'imagerie doit être couplé le plus souvent à celui de la figure, pour produire une image additionnelle qui contient cette information supplémentaire. Mais la complexité de l'ensemble d'imagerie résultant, son encombrement et son coût sont alors très supérieurs à ceux du dispositif de la figure 1.

Le document WO 96/13742 décrit, notamment en relation avec la figure 13 de ce document, un dispositif d'imagerie qui permet de saisir simultanément une image d'une empreinte digitale d'un doigt qui est appliqué sur une face de présentation, et d'un code-barres qui est présenté devant une face d'entrée d'un élément prismatique. Mais parce que la face de présentation du doigt et la face d'entrée de l'élément prismatique forment entre elles un angle qui est rentrant, l'image saisie n'est pas nette à la fois pour l'empreinte digitale et pour le code-barres.

Un but de l'invention est donc de proposer un dispositif d'imagerie qui permette de saisir simultanément deux images distinctes, contenant des informations différentes, et dont la conception soit encore simple.

Un autre but est de proposer un tel dispositif d'imagerie qui présente un encombrement faible et dont le coût ne soit pas significativement augmenté par rapport aux dispositifs antérieurs.

Un autre but encore est de proposer un dispositif d'imagerie capable de fournir des images qui reproduisent chacune à la fois une empreinte cutanée et un motif supplémentaire, d'une façon qui est nette simultanément pour l'empreinte cutanée et pour le motif supplémentaire.

Pour cela, un dispositif d'imagerie conforme à l'invention comprend encore un élément prismatique transparent, un objectif et un capteur d'image qui sont disposés pour que le capteur saisisse une image qui est formée par l'objectif à partir de rayons qui ont traversé l'élément prismatique.

Selon une première caractéristique de l'invention, l'élément prismatique comprend deux faces d'entrée contiguës qui sont décalées angulairement et séparées par une arête, et une face de sortie. Ces deux faces d'entrée et la face de sortie sont disposées de sorte que l'image saisie par le capteur comprenne à la fois une première partie d'image qui est formée à partir de premiers rayons provenant d'une première des deux faces d'entrée de l'élément prismatique et ayant traversé sa face de sortie, et une seconde partie d'image qui est formée à partir de seconds rayons ayant traversé une seconde des faces d'entrée de l'élément prismatique, différente de la première face d'entrée, et sa face de sortie. Pour cela, l'objectif est agencé pour conjuguer optiquement la première face d'entrée de l'élément prismatique avec une première partie de la surface photosensible du capteur d'image, de sorte que la première partie d'image reproduise un premier motif qui est situé contre la première face d'entrée.

Ainsi, le champ optique d'entrée d'un dispositif d'imagerie selon l'invention est constitué par deux parties de champ séparées, dont l'une est une partie de la première face d'entrée de l'élément prismatique. Cette partie de la première face d'entrée de l'élément prismatique est conjuguée optiquement avec la première partie de la surface photosensible du capteur d'image. L'autre partie du champ d'entrée, qui est située en dehors de la première face d'entrée, est conjuguée optiquement à travers la seconde face d'entrée de l'élément prismatique, avec une seconde partie de la surface photosensible du capteur qui est différente de la première partie de cette surface photosensible. De cette façon, chaque image complète qui est saisie par le capteur contient d'une part des informations qui proviennent d'un motif situé sur la première face d'entrée de l'élément prismatique, et d'autre part des informations supplémentaires qui proviennent de la seconde partie du champ d'entrée du dispositif.

En outre, un dispositif d'imagerie selon l'invention utilise un unique objectif et un unique capteur d'image pour produire les deux parties d'image qui correspondent aux deux parties séparées du champ d'entrée. Pour cette raison, l'encombrement et le coût du dispositif ne sont pas augmentés sensiblement par rapport aux dispositifs connus antérieurement.

De plus, étant donné que les deux faces d'entrée de l'élément prismatique sont contiguës et que la première partie du champ d'entrée, correspondant à la première partie d'image, coïncide avec la première face d'entrée, les deux parties d'image sont aussi contiguës sur la surface photosensible du capteur d'image. L'ensemble de cette surface photosensible est donc utile lors de chaque saisie d'image, sans bande intermédiaire qui soit inutilisée entre les deux parties d'image.

Selon une deuxième caractéristique de l'invention, un angle entre les deux faces d'entrée de l'élément prismatique est adapté en outre pour que des rayons qui forment la seconde partie d'image ne subissent pas de réflexion totale à l'intérieur de l'élément prismatique sur la seconde face d'entrée à un endroit où cette dernière est en contact avec de l'air. De cette façon la seconde partie d'image reproduit, à travers l'élément prismatique entre sa seconde face d'entrée et sa face de sortie, un motif qui est situé devant la seconde face d'entrée à l'extérieur de l'élément prismatique.

Selon une troisième caractéristique de l'invention, l'angle entre les deux faces d'entrée de l'élément prismatique est saillant, de sorte qu'une partie d'un plan géométrique qui est conjuguée optiquement avec la surface photosensible du capteur d'image dans la seconde partie d'image, soit située en dehors de l'élément prismatique. De cette façon, un second motif matériel peut être placé dans ce plan géométrique, avec la seconde partie d'image reproduisant ce second motif qui est nette. En outre, la seconde partie d'image peut avoir un contraste qui est élevé.

Enfin, le plan géométrique dont une partie est conjuguée avec la surface du capteur dans la seconde partie d'image, passe aussi par l'arête qui sépare les deux faces d'entrée. Cette continuité qui existe ainsi entre la première face d'entrée et le plan géométrique dont une partie est imagée dans la seconde partie d'image, permet que cette seconde partie d'image soit nette en même temps que la première partie d'image qui reproduit un premier motif situé sur la première face d'entrée. Ainsi, la double fonction du dispositif, qui consiste à imager à la fois deux motifs respectivement sur la première face d'entrée et à travers la seconde face d'entrée de l'élément prismatique, est satisfaite.

L'invention propose aussi un appareil de détection d'empreinte cutanée qui comprend un dispositif d'imagerie tel que décrit précédemment. Un tel appareil est agencé pour que, lorsqu'un utilisateur place une première portion de surface cutanée contre la première face d'entrée de l'élément prismatique, la première partie d'image qui est saisie par le capteur d'image reproduise un motif d'empreinte cutanée de la première portion de surface cutanée. La seconde partie d'image reproduit alors simultanément un motif d'une répartition veineuse qui est située sous une seconde portion de surface cutanée, proche de la première portion de surface cutanée.

Par conséquent, un tel appareil de détection fournit simultanément des informations sur l'empreinte cutanée de l'utilisateur et sur sa répartition veineuse. Il est donc adapté pour qu'une reconnaissance biométrique de l'utilisateur puisse être effectuée, qui soit basée sur ces deux informations.

Dans ce cas, la surface cutanée qui est appliquée contre la première face d'entrée peut être éclairée soit à travers des tissus organiques qui entourent cette surface cutanée, soit par ombroscopie, soit encore par éclairage direct à travers une autre face de l'élément prismatique. Le motif de répartition veineuse peut être éclairé simultanément par transmission à travers les tissus organiques qui entourent cette répartition veineuse.

L'invention propose encore un terminal de lecture qui comprend un dispositif d'imagerie tel que décrit précédemment, et qui est agencé pour que lorsqu'un utilisateur de ce terminal place une portion de surface cutanée contre la première face d'entrée de l'élément prismatique, la première partie d'image reproduise un motif d'empreinte cutanée de cette portion de surface cutanée, et pour que lorsqu'une bande lisible par machine est présentée devant la seconde face d'entrée, la seconde partie d'image reproduise un segment au moins de cette bande lisible par machine.

La surface cutanée qui est appliquée contre la première face d'entrée peut encore être éclairée selon les trois modes d'éclairage cités précédemment pour l'application de détection d'empreinte cutanée et de répartition veineuse. La bande lisible, quant à elle, peut être éclairée soit par transmission à travers cette bande lorsque sa constitution le permet, soit à travers l'élément prismatique.

D'autres particularités et avantages de la présente invention apparaîtront dans la description ci-après d'exemples de réalisation non limitatifs, en référence aux dessins annexés, dans lesquels :
- la figure 1, déjà décrite, est une vue en coupe d'un dispositif de détection d'empreinte digitale connu avant la présente invention ; et
- les figures 2 et 3 sont des vues en coupe de deux dispositifs de détection d'empreinte digitale conformes à la présente invention.

Pour raison de clarté de ces figures, les dimensions des éléments représentés ne sont pas en proportion avec des dimensions réelles ni avec des rapports de dimensions réels. En outre, des références identiques communes aux figures désignent des éléments identiques ou qui ont des fonctions identiques.

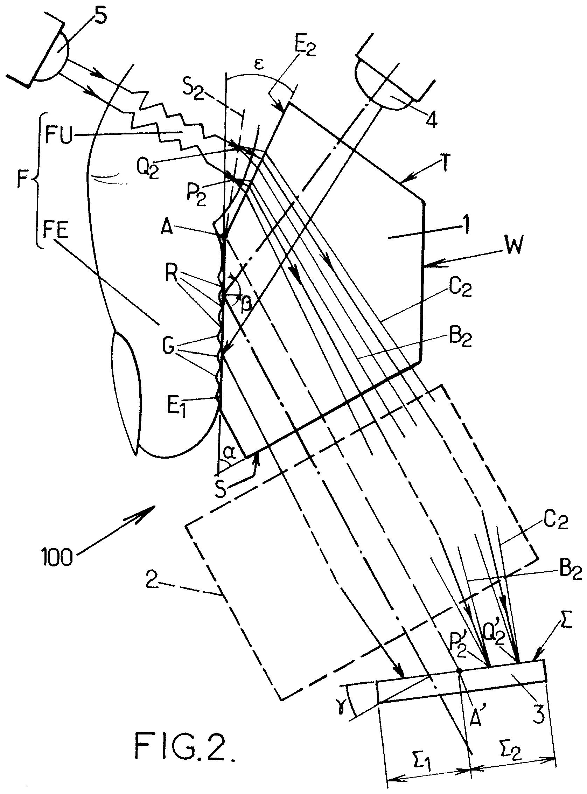

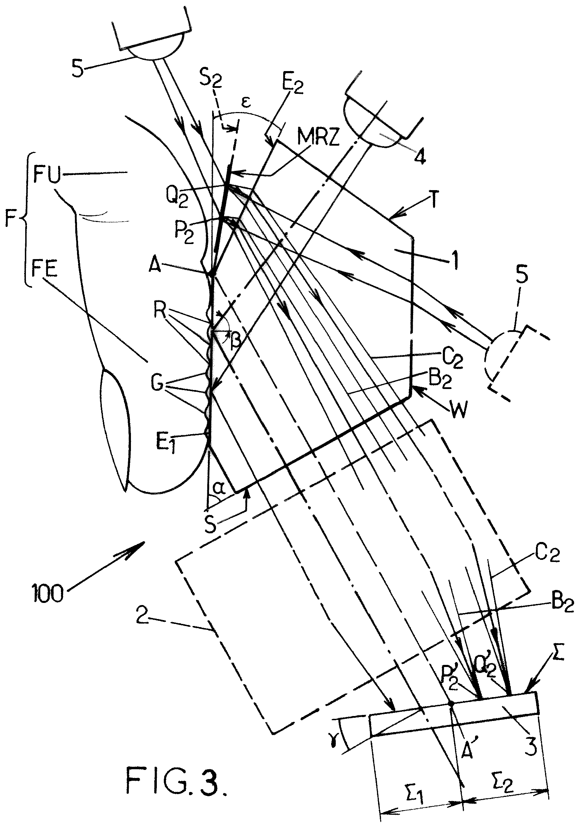

Conformément aux figures 2 et 3, un dispositif d'imagerie 100 selon l'invention comprend un élément prismatique 1 à deux faces d'entrée et une face de sortie. Les deux faces d'entrée, qui sont dites première et seconde faces d'entrée et notées E₁ et E₂, respectivement, sont planes et forment entre elles un angle saillant ε. Elles sont séparées par une arête rectiligne A qui est perpendiculaire au plan de la figure. Les autres éléments du dispositif sont analogues à ceux décrits en référence à la figure 1, si bien qu'il n'est pas nécessaire de répéter leur description. Le capteur d'image 3 est situé de façon que l'image A' de l'arête A, qui est produite par l'objectif 2 à travers la face de sortie S, divise la surface photosensible ∑ en deux parties contiguës.

Le fonctionnement optique du dispositif, pour ce qui concerne un premier motif qui est situé sur la face d'entrée E₁ de l'élément prismatique 1, est identique au fonctionnement qui a été décrit en référence à la figure 1. Notamment, la face d'entrée E₁ peut encore être éclairée de l'une des trois façons suivantes :
soit à travers la face d'entrée E₁, par transmission à l'intérieur du doigt F ;
soit par ombroscopie : pour cela, la première face d'entrée E₁, la face de sortie S et le capteur d'image 3 doivent être agencés de sorte qu'un rayon qui provient de la première face d'entrée E₁ et qui atteint la surface photosensible ∑ du capteur d'image 3 ait subi une réflexion interne dans l'élément prismatique 1 qui soit totale sur cette première face d'entrée à un endroit où elle est en contact avec l'air, ou une réflexion qui est partielle sur la même première face d'entrée à un autre endroit où elle est en contact avec un relief cutané. La nature totale ou partielle de la réflexion caractérise la fraction de l'intensité du rayonnement qui est réfléchi, par rapport à l'intensité du rayonnement incident sur la première face d'entrée. Elle est égale à 100% ou inférieure à 100% selon si la réflexion est totale ou partielle, respectivement. Cette variation de la nature de la réflexion procure à la première partie d'image un contraste important, entre des zones de la première face d'entrée qui sont en contact avec l'air, et d'autres zones de cette face qui sont en contact avec un relief cutané. Le système d'éclairement 4 est alors disposé pour émettre des rayons qui entrent dans l'élément prismatique 1 par sa face supplémentaire T, de façon à éclairer le premier motif qui est situé contre la première face d'entrée E₁. Des points d'image dans la première partie d'image ∑₁, qui correspondent à des points de la face d'entrée E₁ auxquels le matériau de l'élément prismatique 1 est en contact avec de l'air, apparaissent alors plus lumineux que d'autres points d'image de la partie d'image ∑₁, qui correspondent à des points de la face d'entrée E₁ auxquels le matériau de l'élément prismatique 1 est en contact avec un corps extérieur. En effet, les rayons produits par le système d'éclairement 4 qui parviennent sur la face d'entrée E₁ à l'endroit d'un sillon cutané G subissent une réflexion totale en direction de la face de sortie S, et ceux qui parviennent sur la face d'entrée E₁ à l'endroit d'un relief cutané R sortent partiellement de l'élément prismatique à travers cette face E₁ ;

- soit par éclairage direct : le système d'éclairement du premier motif, c'est-à-dire le motif qui est imagé par l'objectif 2 dans la première partie d'image ∑₁. est disposé d'un côté de l'élément prismatique 1 qui est opposé à la première face d'entrée E₁, pour éclairer le premier motif situé contre cette face d'entrée E₁ à travers l'élément prismatique 1. Par exemple, un tel système d'éclairement, qui produit de préférence un éclairage diffus, peut être dirigé vers l'intérieur de l'élément prismatique 1 à travers la face W. La première partie d'image ∑₁ possède alors un contraste inversé par rapport à celui qui est obtenu avec le mode d'éclairage par ombroscopie, selon que le point de la face d'entrée E₁ qui est imagé est en contact ou non avec un corps extérieur. En présence de la face supplémentaire T, un masque absorbant est avantageusement disposé sur celle-ci, et le système d'éclairement du premier motif est disposé pour l'éclairer à partir d'au moins une direction qui passe en dehors du masque. Le masque absorbe ainsi tout rayon qui se propagerait à l'intérieur de l'élément prismatique 1 en provenance de la face supplémentaire T, augmentant ainsi le contraste de la première partie d'image ∑₁.

Il est entendu que la condition d'agencement de la première face d'entrée E₁, de la face de sortie S et du capteur d'image 3, qui est nécessaire pour l'éclairage par ombroscopie, peut être satisfaite même si un autre type d'éclairage est utilisé pour le premier motif contre la face d'entrée E₁.

Par ailleurs, la surface photosensible ∑ du capteur d'image 3 peut être inclinée par rapport au plan qui est perpendiculaire à l'axe optique Δ de l'objectif 2. Ainsi, la face d'entrée E₁ peut être conjuguée optiquement avec la surface photosensible ∑ dans la partie d'image ∑₁.

La partie d'image qui est notée ∑₂ est formée par des rayons qui proviennent du côté de l'arête A opposé à la face d'entrée E₁. Mais l'angle ε est tel que des rayons qui forment la partie d'image ∑₂ ne subissent pas de réflexion totale sur la face d'entrée E₂ à l'intérieur de l'élément prismatique 1, alors que la face d'entrée E₂ n'est en contact qu'avec de l'air. Autrement dit, la partie d'image ∑₂ est formée par des rayons qui ont traversé la face d'entrée E₂ et qui proviennent d'un second motif situé devant cette face, à l'extérieur de l'élément prismatique 1. Pour cela, l'angle ε doit être supérieur à Arcsin(1/n), où n est l'indice de réfraction du matériau de l'élément prismatique 1. D'après la réfraction des rayons à travers la face d'entrée E₂ de l'élément prismatique 1, la partie d'image ∑₂ est conjuguée optiquement avec un plan géométrique appelé plan d'objet supplémentaire S₂, qui passe par l'arête A et qui s'étend au dessus de la face d'entrée E₂, à l'extérieur de l'élément prismatique 1. De cette façon, le second motif qui est situé dans le plan d'objet S₂ est imagé dans la partie d'image ∑₂, à travers l'élément prismatique 1 et l'objectif 2. Les figures 2 et 3 montrent deux faisceaux de rayons B₂ et C₂, qui sont issus respectivement des points P₂ et Q₂ du plan d'objet supplémentaire S₂, et qui forment les points d'image P₂' et Q₂' dans la partie d'image ∑₂.

Le plan d'objet supplémentaire S₂ est situé en dehors de l'élément prismatique 1, si bien que le second motif peut être un motif matériel, qui forme un objet dit réel dans le jargon du domaine optique. Le plan d'objet supplémentaire S₂, qui contient le second motif, passe par l'arête A. Il reste donc proche de la face d'entrée E₁, au moins dans un voisinage de l'arête A, de sorte que le premier et le second motif peuvent apparaître simultanément nets dans l'image totale qui est saisie par le capteur 3, pour un réglage de mise au point adéquat de l'objectif 2.

En outre, l'angle entre la face d'entrée E₁ et le plan d'objet supplémentaire S₂ peut être ajusté en sélectionnant une valeur pour l'angle ε en fonction de la valeur de l'indice de réfraction du matériau transparent qui constitue l'élément prismatique 1. En particulier, la face d'entrée E₁ et le plan d'objet supplémentaire S₂ peuvent être situés dans un même plan géométrique, dans le prolongement l'un de l'autre sans changement d'inclinaison. Autrement dit, l'indice de réfraction n de l'élément prismatique 1 et l'angle ε entre les deux faces d'entrée E₁ et E₂ peuvent être adaptés pour que la seconde partie d'image ∑₂ reproduise le second motif lorsque celui-ci est situé dans un plan géométrique qui contient aussi la face d'entrée E₁. Dans ce cas, le premier et le second motif peuvent apparaître simultanément nets dans l'image qui est saisie par le capteur 3, même avec une profondeur de champ qui est faible. Une telle configuration est obtenue, par exemple, lorsque l'élément prismatique 1 est en PMMA et l'angle ε est environ égal à 21° (degré).

De façon connue, une image qui est produite par un système optique centré tel que l'objectif 2 peut présenter une qualité d'image qui est maximale à proximité de son axe optique, par rapport à des parties de l'image qui sont situées à distance de cet axe optique selon une direction transversale. En effet, la qualité d'image peut être réduite par des aberrations optiques qui sont causées par le système centré lui-même, et qui limitent la résolution et la qualité de l'image. De telles aberrations optiques augmentent en s'éloignant de l'axe optique. Il est alors possible, dans un dispositif d'imagerie conforme à l'invention, de décaler corrélativement l'élément prismatique 1 et le capteur 3, transversalement par rapport à l'axe optique Δ de l'objectif 2, pour que cet axe optique traverse la première partie d'image ∑₁ à distance de la seconde partie d'image ∑₂. De cette façon, le dispositif peut posséder une qualité d'imagerie qui est supérieure pour la reproduction du premier motif situé contre la face d'entrée E₁, par rapport à la reproduction du second motif qui est situé dans le plan d'objet supplémentaire S₂. Ainsi, le premier motif peut posséder un pas («pitch») qui est plus fin que le second motif, les deux motifs étant lisibles dans la même image qui est saisie par le capteur 3.

Plusieurs modes d'éclairage différents peuvent être utilisés pour éclairer le second motif qui est imagé, en fonction de chaque application particulière du dispositif d'imagerie.

Selon un premier mode d'éclairage du second motif, le dispositif d'imagerie 100 peut encore comprendre un second système d'éclairement qui est disposé pour émettre des rayons entrant dans l'élément prismatique 1 par la seconde face d'entrée E₂, à travers la partie du plan géométrique qui est conjuguée optiquement avec la surface photosensible ∑ du capteur d'image 3 dans la seconde partie d'image ∑₂. L'objet réel qui forme le second motif dans le plan d'objet supplémentaire S₂ est alors éclairé par transmission à travers cet objet, s'il est suffisamment transparent. Le second système d'éclairement qui est ainsi utilisé est référencé 5 dans les figures 2 et 3, et est représenté en traits pleins.

Selon un second mode d'éclairage du second motif, le second système d'éclairement 5 est disposé pour émettre des rayons qui entrent dans l'élément prismatique 1 par la face W, de façon à éclairer à travers l'élément prismatique 1 par cette face W et par la face d'entrée E₂, la partie du plan géométrique qui est conjuguée optiquement avec la surface photosensible ∑ du capteur 3 dans la seconde partie d'image ∑₂. Dans ce cas, l'objet qui forme le second motif peut être opaque puisqu'il est éclairé du même côté que l'objectif 2. Le second système d'éclairement 5 qui est ainsi utilisé est représenté en traits interrompus dans la figure 3.

En fonction des modes d'éclairage qui sont utilisés respectivement pour éclairer la face d'entrée E₁ et le second motif, un système d'éclairement commun peut être utilisé.

Un dispositif d'imagerie selon la présente invention peut être utilisé pour de nombreuses applications, qui sont déterminées par l'appareil dans lequel il est incorporé.

L'une de ces applications peut être, en particulier, la détection d'une empreinte digitale d'un utilisateur lorsque celui-ci place une extrémité FE d'un de ses doigts F contre la première face d'entrée E₁ de l'élément prismatique 1. L'appareil peut alors être agencé pour qu'une partie amont FU du doigt se trouve simultanément au dessus de la seconde face d'entrée E₂ de l'élément prismatique 1. Le plan d'objet supplémentaire S₂ est alors situé à l'intérieur du doigt F, sous la peau de celui-ci dans la partie amont FU. Les deux parties d'image qui sont ainsi produites en même temps par l'appareil sur la surface photosensible ∑ et saisies lors d'une même prise de vue, sont :
- la partie d'image ∑₁, qui reproduit le motif d'empreinte digitale de l'extrémité FE du doigt, ce motif d'empreinte digitale étant situé sur la face d'entrée E₁ ; et
- la partie d'image ∑₂, qui reproduit un motif de répartition veineuse de la partie amont FU du doigt, ce motif de répartition veineuse étant présent au niveau du plan d'objet supplémentaire S₂.

Eventuellement, l'appareil peut comprendre en outre un système de guide et de contrôle pour aider l'utilisateur à placer l'extrémité FE et la partie amont FU de son doigt F d'une façon identique lors d'utilisations successives de l'appareil. Ainsi, la partie d'image ∑₂ correspond à chaque fois à une même profondeur de la détection de la répartition veineuse sous la peau, et le motif de cette répartition veineuse peut être utilisé pour effectuer une seconde reconnaissance biométrique de l'utilisateur, en plus de celle qui est basée sur l'empreinte digitale.

Pour cette application de détection de l'empreinte digitale et de la répartition veineuse, la répartition veineuse est éclairée selon le premier mode d'éclairage du second motif qui a été décrit plus haut. Ainsi, la répartition veineuse est éclairée par transmission diffuse à travers le doigt F, comme représenté sur la figure 2. Lorsque l'empreinte digitale est éclairée aussi par transmission à travers le doigt, le système d'éclairement de cette empreinte et celui de la répartition veineuse peuvent être combinés en un système unique.

Dans une autre application d'un dispositif d'imagerie selon l'invention, ce dispositif peut être incorporé à un terminal de lecture qui permet d'une part de saisir («capture» en anglais) une empreinte digitale, et d'autre part de lire un document d'identité qui possède une bande MRZ, pour «Machine Readable Zone» en anglais, par exemple un passeport. Le dispositif 100 permet alors de saisir l'empreinte digitale dans la partie d'image ∑₁ et le code MRZ dans la partie d'image ∑₂. Pour cela, la bande MRZ est placée au niveau du plan d'objet supplémentaire S₂. Eventuellement, la bande MRZ peut défiler dans le plan d'objet supplémentaire S₂ si la partie d'image ∑₂ n'a pas une taille suffisante pour saisir la totalité de la bande MRZ lors d'une exposition unique.

Cette autre application, qui est illustrée par la figure 3, peut aussi être compatible avec le premier mode d'éclairage par transmission à travers le support de la bande MRZ, si celui-ci est suffisamment transparent. Sinon, la bande MRZ peut être éclairée conformément au second mode d'éclairage du second motif qui a été décrit plus haut. Dans ce dernier cas, l'empreinte digitale et la bande MRZ peuvent être éclairés par un même système d'éclairement unique, en éclairage direct à travers la face W.

Il est entendu que l'invention peut être reproduite en l'adaptant par rapport aux modes de réalisation qui ont été décrits en détail ci-dessus, en conservant certains au moins des avantages qui ont été cités. En particulier, les modes d'éclairage peuvent encore être modifiés en fonction de l'application, notamment pour obtenir un contraste amélioré dans l'une et/ou l'autre des deux parties d'image. En outre, l'Homme du métier pourra modifier le dispositif en utilisant les connaissances générales du domaine de l'imagerie, sans mettre en oeuvre une activité inventive distincte de celle de la présente invention.

## Revendications

1. Dispositif d'imagerie (100) comprenant un élément prismatique (1) transparent, un objectif (2) avec un axe optique (Δ) et un capteur d'image (3), disposés de sorte que le capteur saisisse une image formée par l'objectif à partir de rayons ayant traversé l'élément prismatique,
ledit dispositif étant **caractérisé en ce que** l'élément prismatique (1) comprend deux faces d'entrée (E₁, E₂) contiguës, décalées angulairement et séparées par une arête (A), et une face de sortie (S), lesdites faces d'entrée et de sortie étant disposées de sorte que l'image saisie par le capteur comprenne à la fois une première partie d'image (∑₁) formée à partir de premiers rayons provenant d'une première des faces d'entrée de l'élément prismatique et ayant traversé la face de sortie dudit l'élément prismatique, et une seconde partie d'image (∑₂) formée à partir de seconds rayons ayant traversé une seconde des faces d'entrée de l'élément prismatique, différente de ladite première face d'entrée, et ladite face de sortie de l'élément prismatique,
l'objectif (2) étant agencé pour conjuguer optiquement la première face d'entrée (E₁) de l'élément prismatique (1) avec une première partie d'une surface photosensible (∑) du capteur d'image (3), de sorte que la première partie d'image (∑₁) reproduise un premier motif situé contre ladite première face d'entrée de l'élément prismatique,
un angle (ε) entre les deux faces d'entrée (E₁, E₂) de l'élément prismatique étant adapté en outre pour que des rayons formant la seconde partie d'image (∑₂) ne subissent pas de réflexion totale à l'intérieur de l'élément prismatique (1) sur la seconde face d'entrée, à un endroit de ladite seconde face d'entrée en contact avec de l'air,
ledit angle (ε) entre les deux faces d'entrée (E₁, E₂) de l'élément prismatique (1) étant saillant, de sorte qu'une partie d'un plan géométrique (S₂) qui est conjuguée optiquement avec la surface photosensible (Σ) du capteur d'image (3) dans la seconde partie d'image (Σ₂) soit situé en dehors de l'élément prismatique, et ledit plan géométrique passant par l'arrête (A) séparant les deux faces d'entrée (E₁, E₂).

2. Dispositif d'imagerie selon la revendication 1, dans lequel un indice de réfraction de l'élément prismatique (1) et l'angle (ε) entre la première (E₁) et la seconde (E₂) face d'entrée dudit élément prismatique sont adaptés de sorte que le plan géométrique (S₂), dont une partie est conjuguée optiquement avec la surface photosensible (Σ) du capteur d'image (3) dans la seconde partie d'image (Σ₂), contienne la première face d'entrée de l'élément prismatique.

3. Dispositif d'imagerie selon la revendication 1 ou 2, dans lequel la surface photosensible (Σ) du capteur d'image (3) est inclinée par rapport à un plan perpendiculaire à l'axe optique (Δ) de l'objectif (2).

4. Dispositif d'imagerie selon l'une quelconque des revendications précédentes, dans lequel l'objectif (2) est disposé de sorte que l'axe optique (Δ) dudit objectif traverse la première partie d'image (∑₁) à distance de la seconde partie d'image (∑₂).

5. Dispositif d'imagerie selon l'une quelconque des revendications précédentes, dans lequel la première face d'entrée (E₁), la face de sortie (S) et le capteur d'image (3) sont agencés de sorte qu'un rayon provenant de ladite première face d'entrée et atteignant la surface photosensible (∑) dudit capteur d'image ait subi une réflexion interne totale dans l'élément prismatique (1) sur ladite première face d'entrée (E₁) à un endroit en contact avec l'air, ou une réflexion partielle sur ladite première face d'entrée (E₁) à un autre endroit en contact avec un relief cutané, et
dans lequel l'élément prismatique (1) comprend en outre une face supplémentaire (T) disposée par rapport à la première face d'entrée (E₁) de sorte qu'un rayon se propageant dans l'élément prismatique à partir de la face supplémentaire subisse une réflexion totale sur ladite première face d'entrée.

6. Dispositif d'imagerie selon la revendication 5, comprenant en outre :
un premier système d'éclairement (4) disposé pour émettre des rayons entrant dans l'élément prismatique (1) par la face supplémentaire (T) dudit élément prismatique de façon à éclairer le premier motif situé contre la première face d'entrée (E₁) de l'élément prismatique ; et
un second système d'éclairement (5) disposé pour émettre des rayons entrant dans l'élément prismatique (1) par la seconde face d'entrée (E₂) à travers la partie du plan géométrique (S₂) qui est conjuguée optiquement avec la surface photosensible (Σ) du capteur d'image (3) dans la seconde partie d'image (Σ₂).

7. Dispositif d'imagerie selon la revendication 5, comprenant en outre :
un premier système d'éclairement (4) disposé pour émettre des rayons entrant dans l'élément prismatique (1) par la face supplémentaire (T) dudit élément prismatique de façon à éclairer le premier motif situé contre la première face d'entrée (E₁) de l'élément prismatique ; et
un second système d'éclairement (5) disposé pour émettre des rayons entrant dans l'élément prismatique (1) par une autre face (W) dudit élément prismatique opposée à la première face d'entrée (E₁), de façon à éclairer à travers ledit élément prismatique par ladite face opposée et la seconde face d'entrée (E₂), la partie du plan géométrique (S₂) qui est conjuguée optiquement avec la surface photosensible (∑) du capteur d'image (3) dans la seconde partie d'image (∑₂).

8. Dispositif d'imagerie selon la revendication 5, comprenant en outre un masque absorbant disposé sur la face supplémentaire (T).

9. Dispositif d'imagerie selon l'une quelconque des revendications 1 à 5 ou 8, comprenant un premier système d'éclairement disposé d'un côté de l'élément prismatique (1) opposé à la première face d'entrée (E₁), pour éclairer le premier motif situé contre ladite première face d'entrée à travers ledit élément prismatique ; et
un second système d'éclairement (5) disposé pour émettre des rayons entrant dans l'élément prismatique (1) par la seconde face d'entrée (E₂) à travers la partie du plan géométrique (S₂) qui est conjuguée optiquement avec la surface photosensible (∑) du capteur d'image (3) dans la seconde partie d'image (∑₂).

10. Dispositif d'imagerie selon l'une quelconque des revendications 1 à 5 ou 8, comprenant un premier système d'éclairement disposé d'un côté de l'élément prismatique (1) opposé à la première face d'entrée (E₁), pour éclairer le premier motif situé contre ladite première face d'entrée à travers ledit élément prismatique ; et
un second système d'éclairement (5) disposé pour émettre des rayons entrant dans l'élément prismatique (1) par une face (W) dudit élément prismatique opposée à la première face d'entrée (E₁), de façon à éclairer à travers ledit élément prismatique par ladite face opposée et la seconde face d'entrée (E₂), la partie du plan géométrique (S₂) qui est conjuguée optiquement avec la surface photosensible (∑) du capteur d'image (3) dans la seconde partie d'image (∑₂).

11. Dispositif d'imagerie selon la revendication 10, dans lequel les dits premier et second systèmes d'éclairement sont confondus en un système d'éclairement unique, disposé pour éclairer simultanément le premier motif situé contre la première face d'entrée (E₁) de l'élément prismatique (1) et la partie du plan géométrique (S₂) qui est conjuguée optiquement avec la surface photosensible (∑) du capteur d'image (3) dans la seconde partie d'image (∑₂), en émettant des rayons entrant dans l'élément prismatique (1) par la face (W) dudit élément prismatique opposée à la première face d'entrée.

12. Appareil de détection d'empreinte cutanée comprenant un dispositif d'imagerie (100) selon la revendication 6 ou 9, agencé pour que lorsqu'un utilisateur dudit appareil place une première portion de surface cutanée contre la première face d'entrée (E₁) de l'élément prismatique (1), la première partie d'image (∑₁) reproduise un motif d'empreinte cutanée de ladite première portion de surface cutanée, et la seconde partie d'image (∑₂) reproduise simultanément un motif de répartition veineuse située sous une seconde portion de surface cutanée proche de ladite première portion de surface cutanée.

13. Appareil de détection d'empreinte cutanée selon la revendication 12, adapté pour que l'utilisateur place une extrémité (FE) d'un doigt (F) dudit utilisateur contre la première face d'entrée (E₁) de l'élément prismatique (1), et simultanément une partie amont (FU) dudit doigt au dessus de la seconde face (E₂) d'entrée dudit élément prismatique.

14. Terminal de lecture comprenant un dispositif d'imagerie (100) selon l'une quelconque des revendications 1 à 11, agencé pour que lorsqu'un utilisateur dudit terminal place une portion de surface cutanée contre la première face d'entrée (E₁) de l'élément prismatique (1), la première partie d'image (∑₁) reproduise un motif d'empreinte cutanée de ladite portion de surface cutanée, et lorsqu'une bande lisible par machine (MRZ) est présentée devant la seconde face d'entrée (E₂), la seconde partie d'image (∑₂) reproduise un segment au moins de ladite bande lisible par machine.

## Patentansprüche

1. Bildgebungsvorrichtung (100), umfassend ein transparentes Prismenelement (1), ein Objektiv (2) mit einer optischen Achse (Δ) und einen Bildsensor (3), die so angeordnet sind, dass der Sensor ein anhand von durch das Prismenelement hindurchgegetretenen Strahlen durch das Objektiv gebildetes Bild erfasst,
wobei die Vorrichtung **dadurch gekennzeichnet ist, dass** das Prismenelement (1) zwei benachbarte Eingangsflächen (E₁, E₂), die winklig versetzt und durch eine Kante (A) getrennt sind, und eine Ausgangsfläche (S) umfasst, wobei die Eingangs- und Ausgangsflächen so angeordnet sind, dass das vom Sensor erfasste Bild sowohl einen ersten Bildabschnitt (∑₁), der ausgehend von ersten Strahlen gebildet wird, die von einer ersten der Eingangsflächen des Prismenelements stammen und durch die Ausgangsfläche des Prismenelements hindurchgetreten sind, und einen zweiten Bildabschnitt (∑₂), der ausgehend von zweiten Strahlen gebildet wird, die durch eine zweite der Eingangsflächen des Prismenelements, die sich von der ersten Eingangsfläche unterscheidet, und durch die Ausgangsfläche des Prismenelements hindurchgetreten sind, umfasst,
wobei das Objektiv (2) so ausgebildet ist, dass es die erste Eingangsfläche (E₁) des Prismenelements (1) mit einem ersten Abschnitt einer lichtempfindlichen Oberfläche (∑) des Bildsensors (3) optisch verbindet, sodass der erste Bildabschnitt (∑₁) ein erstes Muster reproduziert, das sich an der ersten Eingangsfläche des Prismenelements befindet,
wobei ein Winkel (ε) zwischen den beiden Eingangsflächen (E₁, E₂) des Prismenelements so angepasst wird, dass ferner Strahlen, die den zweiten Bildabschnitt (∑₂) bilden, an einer Stelle der zweiten Eingangsfläche, die mit Luft in Kontakt steht, nicht einer Totalreflexion im Inneren des Prismenelements (1) auf der zweiten Eingangsfläche unterliegen,
wobei der Winkel (ε) zwischen den beiden Eingangsflächen (E₁, E₂) des Prismenelements (1) hervorsteht, sodass ein Abschnitt einer geometrischen Ebene (S₂), der optisch mit der lichtempfindlichen Oberfläche (∑) des Bildsensors (3) im zweiten Bildabschnitt (∑₂) verbunden ist, sich außerhalb des Prismenelements befindet und die geometrische Ebene durch die Kante (A) verläuft, die die beiden Eingangsflächen (E₁, E₂) trennt.

2. Bildgebungsvorrichtung nach Anspruch 1, wobei ein Brechungsindex des Prismenelements (1) und der Winkel (ε) zwischen der ersten (E₁) und der zweiten (E₂) Eingangsfläche des Prismenelements so angepasst sind, dass die geometrische Ebene (S₂), deren einer Abschnitt optisch mit der lichtempfindlichen Oberfläche (∑) des Bildsensors (3) im zweiten Bildabschnitt (∑₂) verbunden ist, die erste Eingangsfläche des Prismenelements enthält.

3. Bildgebungsvorrichtung nach Anspruch 1 oder 2, wobei die lichtempfindliche Oberfläche (∑) des Bildsensors (3) in Bezug auf eine Ebene senkrecht zur optischen Achse (Δ) des Objektivs (2) geneigt ist.

4. Bildgebungsvorrichtung nach einem der vorangehenden Ansprüche, wobei das Objektiv (2) so angeordnet ist, dass die optische Achse (Δ) des Objektivs mit Abstand vom zweiten Bildabschnitt (∑₂) den ersten Bildabschnitt (∑₁) durchquert.

5. Bildgebungsvorrichtung nach einem der vorangehenden Ansprüche, wobei die erste Eingangsfläche (E₁), die Ausgangsfläche (S) und der Bildsensor (3) so angeordnet sind, dass ein Strahl, der von der ersten Eingangsfläche kommt und auf die lichtempfindliche Oberfläche (Σ) des Bildsensors auftrifft, einer internen Totalreflexion in dem Prismenelement (1) auf der ersten Eingangsfläche (E₁) an einer mit Luft in Kontakt stehenden Stelle unterliegt, oder einer Teilreflexion auf der ersten Eingangsfläche (E₁) an einer mit einem Hautrelief in Kontakt stehenden anderen Stelle, und
wobei das Prismenelement (1) ferner eine zusätzliche Fläche (T) aufweist, die in Bezug auf die erste Eingangsfläche (E₁) so angeordnet ist, dass sich ein Strahl, der sich in dem Prismenelement von der zusätzlichen Fläche aus ausbreitet, auf der ersten Eingangsfläche einer Totalreflexion unterliegt.

6. Bildgebungsvorrichtung nach Anspruch 5, ferner umfassend:
ein erstes Beleuchtungssystem (4), das vorgesehen ist, um Strahlen auszusenden, die durch die zusätzliche Fläche (T) des Prismenelements in das Prismenelement (1) eindringen, sodass das erste Muster, das sich an der ersten Eingangsfläche (E₁) des Prismenelements befindet, beleuchtet wird; und
ein zweites Beleuchtungssystem (5), das vorgesehen ist, um Strahlen auszusenden, die durch die zweite Eingangsfläche (E₂) in das Prismenelement (1) eindringen, wobei sie den Abschnitt der geometrischen Ebene (S₂) durchqueren, der optisch mit der lichtempfindlichen Oberfläche (∑) des Bildsensors (3) im zweiten Bildabschnitt (∑₂) verbunden ist.

7. Bildgebungsvorrichtung nach Anspruch 5, ferner umfassend:
ein erstes Beleuchtungssystem (4), das vorgesehen ist, um Strahlen auszusenden, die durch die zusätzliche Fläche (T) des Prismenelements in das Prismenelement (1) eindringen, sodass das erste Muster, das sich gegenüber der ersten Eingangsfläche (E₁) des Prismenelements befindet, beleuchtet wird; und
ein zweites Beleuchtungssystem (5), das vorgesehen ist, um Strahlen auszusenden,
die durch eine andere Fläche (W) des Prismenelements gegenüber der ersten Eingangsfläche (E₁) in das Prismenelement (1) eindringen, sodass durch diese gegenüberliegende Fläche und die zweite Eingangsfläche (E₂) das Prismenelement durchquerend der Abschnitt der geometrischen Ebene (S₂) beleuchtet wird, der optisch mit der lichtempfindlichen Oberfläche (∑) des Bildsensors (3) im zweiten Bildabschnitt (∑₂) verbunden ist.

8. Bildgebungsvorrichtung nach Anspruch 5, ferner umfassend eine auf der zusätzlichen Fläche (T) angeordnete absorbierende Maske.

9. Bildgebungsvorrichtung nach einem der Ansprüche 1 bis 5 oder 8, umfassend ein erstes Beleuchtungssystem, das an einer Seite des Prismenelements (1) vorgesehen ist, die der ersten Eingangsfläche (E₁) gegenüberliegt, um das erste Muster, das sich an der ersten Eingangsfläche befindet durch das Prismenelement hindurch zu beleuchten; und
ein zweites Beleuchtungssystem (5), das vorgesehen ist, um Strahlen auszusenden, die durch die zweite Eingangsfläche (E₂) in das Prismenelement (1) eindringen, wobei sie den Abschnitt der geometrischen Ebene (S₂) durchqueren, der optisch mit der lichtempfindlichen Oberfläche (∑) des Bildsensors (3) im zweiten Bildabschnitt (∑₂) verbunden ist.

10. Bildgebungsvorrichtung nach einem der Ansprüche 1 bis 5 oder 8, umfassend ein erstes Beleuchtungssystem, das an einer Seite des Prismenelements (1) vorgesehen ist, die der ersten Eingangsfläche (E₁) gegenüberliegt, um das erste Muster, das sich an der ersten Eingangsfläche befindet durch das Prismenelement hindurch zu beleuchten; und
ein zweites Beleuchtungssystem (5), das vorgesehen ist, um Strahlen auszusenden, die durch eine Fläche (W) des Prismenelements gegenüber der ersten Eingangsfläche (E₁) in das Prismenelement (1) eindringen, sodass durch diese gegenüberliegende Fläche und die zweite Eingangsfläche (E₂) das Prismenelement durchquerend der Abschnitt der geometrischen Ebene (S₂) beleuchtet wird, der optisch mit der lichtempfindlichen Oberfläche (∑) des Bildsensors (3) im zweiten Bildabschnitt (∑₂) verbunden ist.

11. Bildgebungsvorrichtung nach Anspruch 10, wobei das erste und das zweite Beleuchtungssystem zu einem einzigen Beleuchtungssystem zusammengefasst sind, das dafür eingerichtet ist, gleichzeitig das erste Muster, das sich an der ersten Eingangsfläche (E₁) des Prismenelements (1) befindet, und den Abschnitt der geometrischen Ebene (S₂), der optisch mit der lichtempfindlichen Oberfläche (∑) des Bildsensors (3) im zweiten Bildabschnitt (∑₂) verbunden ist, zu beleuchten, indem Strahlen ausgesendet werden, die durch die Fläche (W) des Prismenelements gegenüber der ersten Eingangsfläche in das Prismenelement (1) eindringen.

12. Gerät zur Erkennung von Hautabdrücken, umfassend eine Bildgebungsvorrichtung (100) nach Anspruch 6 oder 9, die so ausgebildet ist, dass, wenn ein Benutzer des Geräts einen ersten Abschnitt der Hautoberfläche gegen die erste Eingangsfläche (E1) des Prismenelements (1) legt, der erste Bildabschnitt (∑₁) ein Hautabdruckmuster des ersten Abschnitts der Hautoberfläche reproduziert, und der zweite Bildabschnitt (∑₂) gleichzeitig ein venöses Verteilungsmuster, das sich unter einem zweiten Abschnitt der Hautoberfläche in der Nähe des ersten Abschnitts der Hautoberfläche befindet, reproduziert.

13. Gerät zur Erkennung von Hautabdrücken nach Anspruch 12, das dazu ausgelegt ist, dass der Benutzer ein Ende (FE) eines Fingers (F) des Benutzers gegen die erste Eingangsfläche (E₁) des Prismenelements (1) und gleichzeitig einen oberen Teil (FU) des Fingers über die zweite Eingangsfläche (E₂) des Prismenelements legt.

14. Leseterminal, umfassend eine Bildgebungsvorrichtung (100) nach einem der Ansprüche 1 bis 11, das so ausgebildet ist, dass, wenn ein Benutzer des Terminals einen Abschnitt der Hautoberfläche gegen die erste Eingangsfläche (E₁) des Prismenelements (1) legt, der erste Bildabschnitt (∑₁) ein Hautabdruckmuster des Abschnitts der Hautoberfläche reproduziert, und wenn ein maschinenlesbarer Streifen (MRZ) vor der zweiten Eingangsfläche (E₂) vorhanden ist, der zweite Bildabschnitt (∑₂) mindestens ein Segment des maschinenlesbaren Streifens reproduziert.

## Claims

1. Imaging device (100) comprising a transparent prismatic element (1), an objective (2) with an optical axis (Δ), and an image sensor (3), which are arranged so that the sensor captures an image formed by the objective from rays having passed through the prismatic element,
said device being **characterized in that** said prismatic element (1) comprises two contiguous entrance faces (E₁, E₂), angled relative to each other and separated by an edge (A), and an exit face (S), said entrance faces and exit face being arranged so that the image captured by the sensor comprises both a first image part (∑₁) formed from first rays originating from a first of the entrance faces of the prismatic element and having passed through the exit face of said prismatic element, and a second image part (∑₂) formed from second rays having passed through a second of the entrance faces of the prismatic element, different from said first entrance face, and said exit face of the prismatic element,
the objective (2) being arranged so that the first entrance face (E₁) of the prismatic element (1) is conjugate with a first part of a photosensitive surface (∑) of the image sensor (3), so that the first image part (∑₁) reproduces a first pattern located against said first entrance face of the prismatic element,
an angle (ε) between the two entrance faces (E₁, E₂) of the prismatic element being additionally adapted so that rays forming the second image part (∑₂) do not undergo total reflection within the prismatic element (1) on the second entrance face, at a location where said second entrance face is in contact with air,
said angle (ε) between the two entrance faces (E₁, E₂) of the prismatic element (1) being salient, so that a portion of a geometric plane (S₂), which is optically conjugate with the photosensitive surface (∑) of the image sensor (3) in the second image part (∑₂), is located outside the prismatic element, and said geometric plane passes through the edge (A) separating the two entrance faces (E₁, E₂).

2. Imaging device according to claim 1, wherein a refractive index of the prismatic element (1) and the angle (ε) between the first (E₁) and the second (E₂) entrance face of said prismatic element are such that the geometric plane (S₂), of which a portion is optically conjugate with the photosensitive surface (∑) of the image sensor (3) in the second image part (∑₂), contains the first entrance face of the prismatic element.

3. Imaging device according to claim 1 or 2, wherein the photosensitive surface (∑) of the image sensor (3) is sloped relative to a plane perpendicular to the optical axis (Δ) of the objective (2).

4. Imaging device according to any one of the above claims, wherein the objective (2) is arranged so that the optical axis (Δ) of said objective passes through the first image part (∑₁) at a distance from the second image part (∑₂).

5. Imaging device according to any one of the above claims, wherein the first entrance face (E₁), the exit face (S), and the image sensor (3), are arranged so that a ray originating from said first entrance face and reaching the photosensitive surface (∑) of said image sensor has undergone total internal reflection within the prismatic element (1) on said first entrance face (E₁) at a location where it is in contact with air, or partial reflection on said first entrance face (E₁) at another location where it is in contact with a skin ridge, and
wherein the prismatic element (1) additionally comprises a supplemental face (T) arranged relative to the first entrance face (E₁) so that a ray propagating in the prismatic element from the supplemental face undergoes total reflection on said first entrance face.

6. Imaging device according to claim 5, additionally comprising:
a first lighting system (4) arranged for emitting rays entering the prismatic element (1) through the supplemental face (T) of said prismatic element so as to illuminate the first pattern located against the first entrance face (E₁) of the prismatic element; and
a second lighting system (5) arranged for emitting rays entering the prismatic element (1) through the second entrance face (E₂) and the portion of the geometric plane (S₂) which is optically conjugate with the photosensitive surface (∑) of the image sensor (3) in the second image part (∑₂).

7. Imaging device according to claim 5, additionally comprising:
a first lighting system (4) arranged for emitting rays entering the prismatic element (1) through the supplemental face (T) of said prismatic element so as to illuminate the first pattern located against the first entrance face (E₁) of the prismatic element; and
a second lighting system (5) arranged for emitting rays entering the prismatic element (1) through another face (W) of said prismatic element opposite the first entrance face (E₁), so as to illuminate, through said prismatic element and said opposite face and the second entrance face (E₂), the portion of the geometric plane (S₂) which is optically conjugate with the photosensitive surface (∑) of the image sensor (3) in the second image part (∑₂).

8. Imaging device according to claim 5, additionally comprising an absorbing mask arranged on the supplemental face (T).

9. Imaging device according to any one of claims 1 to 5 or 8, comprising a first lighting system arranged on a side of the prismatic element (1) opposite the first entrance face (E₁), in order to illuminate the first pattern located against said first entrance face, through said prismatic element; and a second lighting system (5) arranged for emitting rays entering the prismatic element (1) through the second entrance face (E₂) and the portion of the geometric plane (S₂) which is optically conjugate with the photosensitive surface (∑) of the image sensor (3) in the second image part (∑₂).

10. Imaging device according to any one of claims 1 to 5 or 8, comprising a first lighting system arranged on a side of the prismatic element (1) opposite the first entrance face (E₁), in order to illuminate the first pattern located against said first entrance face, through said prismatic element; and a second lighting system (5) arranged for emitting rays entering the prismatic element (1) through a face (W) of said prismatic element opposite the first entrance face (E₁), so as to illuminate, through said prismatic element and said opposite face and the second entrance face (E₂), the portion of the geometric plane (S₂) which is optically conjugate with the photosensitive surface (∑) of the image sensor (3) in the second image part (∑₂).

11. Imaging device according to claim 10, wherein said first and second lighting systems are combined into a single lighting system, arranged to illuminate simultaneously the first pattern located against the first entrance face (E₁) of the prismatic element (1) and the portion of the geometric plane (S₂) which is optically conjugate with the photosensitive surface (∑) of the image sensor (3) in the second image part (∑₂), by emitting rays entering the prismatic element (1) through the face (W) opposite the first entrance face, of said prismatic element.

12. Skin pattern detection apparatus comprising an imaging device (100) according to claim 6 or 9, arranged so that when a user of said apparatus places a first skin surface portion against the first entrance face (E₁) of the prismatic element (1), the first image part (Σ₁) reproduces a skin pattern of said first skin surface portion, and the second image part (Σ₂) simultaneously reproduces a vein distribution pattern located under a second skin surface portion in the vicinity of said first skin surface portion.

13. Skin pattern detection apparatus according to claim 12, adapted so that the user places a tip (FE) of a finger (F) against the first entrance face (E₁) of the prismatic element (1), and simultaneously places an upper part (FU) of said finger above the second entrance face (E₂) of said prismatic element.

14. Reading terminal comprising an imaging device (100) according to any one of claims 1 to 11, arranged so that when a user of said terminal places a skin surface portion against the first entrance face (E₁) of the prismatic element (1), the first image part (∑₁) reproduces a skin pattern of said skin surface portion, and when a machine-readable zone (MRZ) is placed in front of the second entrance face (E₂), the second image part (∑₂) reproduces at least a segment of said machine-readable zone.
